# EUROPÄISCHE PATENTSCHRIFT

(11) **EP 0 808 345 B1**
(45) Veröffentlichungstag und Bekanntmachung des Hinweises auf die Patenterteilung: **07.07.1999**
(21) Anmeldenummer: 96900826.7
(22) Anmeldetag: 05.02.1996
(51) Int. Cl.: C09D 5/00, C09D 5/02

(54) **WÄSSRIGE MARKIERUNGSMASSE UND VERFAHREN ZU DEREN HERSTELLUNG**
WATER-BASED MARKER MATERIAL AND A METHOD OF MANUFACTURING SAID MATERIAL
MATIERE DE MARQUAGE AQUEUSE ET SON PROCEDE DE PRODUCTION

(30) Priorität: 08.02.1995 CH 36195
(43) Veröffentlichungstag der Anmeldung: 26.11.1997
(73) Patentinhaber: PLASTIROUTE S.A., 1207 Genf (CH)
(72) Erfinder: BOLDT, Peter-Christian, D-79211 Denzlingen (DE)
(74) Vertreter: Jörchel, Dietrich R.A.
(86) Internationale Anmeldenummer: CH9600043
(87) Internationale Veröffentlichungsnummer: WO9624640

(56) Entgegenhaltungen:
- DE-A- 1 817 066
- DE-A- 4 244 665
- GB-A- 2 255 099

## Beschreibung

Die Erfindung bezieht sich auf eine wässrige Markierungsmasse für Horizontal-Markierungen auf Strassen oder anderen Verkehrsflächen, welche ein trocknungsbeschleunigtes Bindemittel auf der Grundlage eines anionisch-stabilisierten Emulsionspolymers und Farbpigmente sowie Füllstoffe enthält. Ausserdem bezieht sich die Erfindung auf Verfahren zur Herstellung einer solchen wässrigen Markierungsmasse

Unter dem hier verwendeten Ausdruck "trocknungsbeschleunigte Bindemittel" werden Polymerzubereitungen verstanden, die durch einen integrierten physikochemischen Mechanismus dafür sorgen, dass mit derartigen Bindemitteln hergestellte Markierungsmassen nach ihrer Verlegung wesentlich schneller trocknen als ein konventionelles Bindemittel enthaltende Markierungsmassen. Erst durch diese beschleunigte Trocknung können diese Markierungsmassen in geeigneter Weise verkehrstechnisch eingesetzt werden, da auf lange, den Verkehr behindernde Strassensperrungen wegen langer Trockungszeiten verzichtet werden kann.

Derartige bekannte trocknungsbeschleunigte Bindemittel, die vor allem für Horizontalmarkierungen auf Strassen bestimmt sind, werden beispielsweise insbesondere in der EP-B-0 322 188 und der EP-A-0 409 459 beschrieben und sind zum Beispiel zur Zeit als handelsübliche Produkte der Firma ROHM and HAAS, Philadelphia, Pennsylvania, USA, unter dem Handelsnamen PRIMAL Nr. 2706 und Nr. 3031 im Handel erhältlich.

Zur Erzielung der beschleunigten Trocknung bestehen diese bekannten Polymerzubereitungen aus wasserunlöslichen, anionisch stabilisierten Kunststoffpolymerteilchen und aus einem polyfunktionellen wasserunlöslichen bzw. wasserlöslichen Amin. Diese beiden Bestandteile sind vorzugsweise miteinander unverträglich und können bei genügend hohem pH-Wert nicht reagieren. Fällt jedoch der pH-Wert der Zubereitung unter einen bestimmten Wert, dann tritt eine zur Trockung führende physiko-chemische Reaktion der Bindemittelkomponenten ein. Der zunächst stabilisierende hohe pH-Wert wird durch Zugabe einer flüchtigen Base, vorzugsweise Amoniak, erreicht. Wenn der pH-Wert einer Farbformulierung auf der Grundlage eines solchen Bindemittels durch Entweichen der flüchtigen Base einen bestimmten Wert unterschreitet, dann verfestigt sich bzw. dann trocknet die Markierungsmasse sehr schnell, und zwar relativ unabhängig von den äusseren klimatischen Bedingungen und auch von der Schichtdicke.

Allerdings sind Markierungsmassen, welche bekannte, trocknungsbeschleunigte Bindemittel, wie in den genannten Druckschriften beschrieben und wie insbesondere zum Beispiel das erwähnte Primal 2706, sowie eine konventionelle geeignete Kombination aus festen anorganischen Partikel wie Farbpigmenten, üblichen Additiven und Füllstoffen enthalten, bisher lediglich in Form einer spritzfähigen Markierungsfarbe mit einem Anteil an flüchtigen Substanzen von wenigstens 20% hergestellt und getestet worden, und diese spritzfähigen Markierungsfarben konnten bisher ausschliesslich zur Herstellung von Markierungen verwendet werden, deren Schichtdicke geringer als 1 mm war. So beziehen sich zum Beispiel die in der EP-A-0 409 459 beschriebenen Versuche mit dem trocknungsbeschleunigten Bindemittel auf Nassfilmstärken von etwa 0,03 mm und auf Trockenfilmstärken von 0,09 mm. Der Grund dafür liegt darin, dass die bisher bekannten Farbformulierungen, denen zum Erreichen einer verkehrstechnisch erforderlichen, raschen Trocknungsgeschwindigkeit ein trocknungsbeschleunigtes Bindemittel zugrundeliegt, schon bei Schichtdicken von weniger als einem Millimeter starke Rissbildung zeigen und ihre Qualität erheblich beeinträchtigende Oberflächendefekte aufweisen.

Für Horizontalmarkierungen mit Schichtdicken von wenigstens einem Millimeter, wie sie häufig benötigt werden, sind die bisher bekannten rasch trocknenden Markierungsmassen daher nicht geeignet.

Dickschichtmarkierungen, die Schichtdicken von ungefähr 1 bis 3 mm haben, werden wegen ihrer hohen Viskosität hauptsächlich im sogenannten Ziehschuhverfahren verlegt. Bei Arbeiten wie der Herstellung von Richtungspfeilen kann auch mit dem Spachtel gearbeitet werden. Gemäss anderer Applikationstechniken werden zum Beispiel durch eine Art Schleuder bis zu 3 mm hohe Häufchen auf die Markierungslinie geworfen, und man erhält auf diese Weise eine profilierte Strassenmarkierung mit erhöhter Nachtsichtbarkeit bei Nässe. Darüberhinaus sind verschiedene weitere Applikationstechniken zur Herstellung profilierter Markierungen mit unterschiedlichsten Profilformen bekannt. Sehr häufig werden für Dickschichtmarkierungen Zwei-Komponenten-Systeme verwendet, bei denen polymere Methacrylate als Bindemittel dienen. Die Aushärtung des Materials erfolgt durch Vermischen der Masse mit Peroxiden, wodurch eine Polymerisation des Materials bewirkt wird. Die Trocknungszeiten dieser Zwei-Komponenten-Markierungsmassen liegen im allgemeinen zwischen 20 und 35 Minuten. Die Verarbeitung ist aufwendig, und einmal mit Peroxid vermengte Massen müssen innerhalb von 20 bis 30 Minuten verbraucht werden.

Ferner werden bisher für Dickschichtmarkierungen auch Thermoplastikmassen verwendet, in denen bei höheren Temperaturen schmelzbare Kunststoffe als Bindemittel wirken. Zum Schmelzen der thermoplastischen Massen müssen diese vor Verarbeitung auf der Strasse mehrere Stunden lang aufgeheizt werden, um die Arbeitsviskosität herzustellen. Während der Verar-beitung muss ebenfalls eine ständige Energiezufuhr mit Spezialmaschinen aufrecht erhalten werden, damit die Markierungsmasse verlegt werden kann. Die Trockenzeiten sind jedoch extrem kurz, da das Material zum Aushärten nur abkühlt. Mit der aufwendigen Verarbeitung ist auch der Verbrauch an Primärenergie sehr hoch.

Die Möglichkeit, in wesentlich wirtschaftlicherer Weise wasserverdünnbare Dickschichtmarkierungsmassen gemäss dem aktuellen Stand der Technik einzusetzen, ist bei Verwendung konventioneller, nicht trocknungsbeschleunigter Bindemittel wegen der extrem langen Trocknungszeiten praktisch ausgeschlossen und bei Verwendung des erwähnten, trocknungsbeschleunigten Bindemittels wegen der nicht akzeptablen Rissbildung im Material praktisch ausgeschlossen.

Der vorliegenden Erfindung liegt die Aufgabe zugrunde, unter Verwendung von bekannten, trocknungsbeschleunigten Bindemitteln, insbesondere der erwähnten, unter dem Handelsnamen Primal erhältlichen Bindemittel, und unter Ausnutzung des diesen Bindemitteln innewohnenden integrierten Trocknungsmechanismus wasserverdünnbare Markierungsmassen für Dickschichten von etwa 1 bis 3 mm Dicke zu schaffen, deren Brauchbarkeit und Einsatzfähigkeit in keiner Weise von Oberflächendefekten oder Rissen beeinträchtigt oder durch zu lange Trocknungszeiten in Frage gestellt wird.

Diese Aufgabe wird durch eine wässrige Markierungsmasse gemäss dem Oberbegriff des Anspruchs 1 mit den im kennzeichnenden Teil dieses Anspruchs 1 angegebenen Merkmalen gelöst.

Diese Markierungsmasse hat also einen ungewöhnlich hohen Festkörpergehalt, insbesondere an groben Füllstoffen, und damit einen nur geringeren Anteil an Bindemittel und folglich flüchtige Substanzen, als üblicherweise in den spritzbaren Markierungsfarben vorhanden sind. Bekanntlich enthalten die üblichen Bindemittel in Form wässriger Dispersionen wie auch das hier genannte trocknungsbeschleunigte Bindemittel etwa 50% an flüchtigen Substanzen, vorwiegend Wasser, so dass die Markierungsmasse nach der Erfindung, unter Berücksichtigung des geringen Anteils an übrigen flüchtigen Substanzen in den Additiven, nur etwa 7 bis 13 Gew.-% an flüchtigen Anteilen enthält.

Es hat sich in überraschender Weise gezeigt, dass bei einer derartigen Zusammensetzung der Markierungsmasse eine Rissbildung auch bei einer Schichtdicke von 3 mm vollkommen vermieden wird und selbst bei Betrachtung der verlegten Markierung mit 15-facher optischer Vergrösserung keine Defekte zu erkennen sind, und dass im Gegensatz zu mit konventionellen Bindemitteln formulierten Markierungsmassen die Trocknungszeiten wegen des nur geringen Anteils an flüchtigen Substanzen sehr kurz sind (15 bis 30 Minuten).

Der niedrig viskose Farbanteil, der 40 bis 60 Gewichts-% der Markierungsmasse ausmacht, besteht aus einem bekannten, trocknungsbeschleunigten Bindemittel, Farbpigmenten, einigen üblichen Additiven und feinen, pulverförmigen Füllstoffen mit maximalem durchschnittlichen Korndurchmesser von 0,03 mm, wie zum Beispiel in der EP-A-0 409 459 und EP-B-0 322 188 beschrieben. Dieser niedrigviskose Anteil stellt eine spritzfähige Masse dar. Die restlichen Gewichtsanteile bestehen aus groben Füllstoffen, deren Teilchendurchmesser wenigstens 0,1 mm, vorzugsweise 0,1 bis 0,7 mm beträgt.

Die Herstellung des niedrig viskosen Farbanteils erfolgt nach dem Stand der Technik und gemäss den bekannten Vorschriften zur Herstellung von wässrigen Dispersionsfarben.

Die nachstehend beschriebenen Markierungsmassen, die als Beispiele getestet wurden und deren Testergebnisse in den Tabellen 1 und 2 (Seite 13) angegeben sind, enthielten einen niedrigviskosen Farbanteil von 50 Gewichts-% sowie ein Gemisch von groben Füllstoffen, wobei dieses Füllstoffgemisch im folgenden "Anti-Cracking-Filler", abgekürzt AC-Filler, genannt wird.

Der niedrig viskose Farbanteil setzte sich wie folgt zusammen, wobei sich die angegebenen Gewichts-% auf die fertige Markierungsmasse beziehen :

Als trocknungsbeschleunigtes Bindemittel wurde das bereits früher erwähnte, unter dem Handelsnamen PRIMAL Nr. 2706 auf dem Markt erhältliche Produkt verwendet, und zwar mit einem Anteil von 18 Gewichts-%. Als weisse Farbpigmente wurde Titandioxid mit einem Anteil von 7 Gewichts-% verwendet. Die pulverförmigen Füllstoffe bestanden bei einigen Proben aus Calciumcarbonat, bei anderen Proben aus Siliciumdioxid und bei weiteren Proben aus aus einer Mischung von beiden, und zwar mit einem Anteil von 23 Gewichts-%. Alle diese feinkörnigen Füllstoffe, deren Teilchen einen maximalen durchschnittlichen Korndurchmesser von 0,03 mm hatten, lieferten praktisch dasselbe Ergebnis. Schliesslich wurde eine übliche Mischung von Additiven zugefügt, bestehend aus einem Dispergiermittel, einem Netzmittel, einem Entschäumer, einem Filmbilde-Hilfsmittel und einem geringen Anteil eines flüchtigen Alkohols; diese Anteile an Additiven addieren sich zu den anderen Komponenten der Markierungsmasse und betragen etwa 2 Gewichts-%, bezogen auf 100% Markierungsmasse.

Zur Bildung der fertigen Markierungsmasse wurden diesen so hergestellten, niedrig viskosen Farbanteilen jeweils 50 Gewichts-% des AC-Fillers zugegeben. Der Vorgang des Auffüllens des niedrig viskosen Farbanteils mit dem A.C.-Filler erfolgte nach dem Stand der Technik und den Vorschriften zur Herstellung viskoser Massen.

Das Bindemittel enthält etwa zu gleichen Teilen feste und flüchtige Substanzen, vor allem Wasser. Ebenso bestehen die Additive, wie Dispergiermittel und Netzmittel, ungefähr zu gleichen Teilen aus festen und flüchtigen Substanzen. Da alle übrigen Komponenten aus Festkörpern bestehen, beträgt der Festkörperanteil der getesteten Proben etwa 90 Gewichts-%.

Tabelle 1 (Seite 13) zeigt in den Reihen 1 bis 5 fünf verschiedene Zusammensetzungen dieses AC-Fillers, mit welchem Markierungsmassen getestet wurden, deren niedrigviskoser Farbanteil 50 Gewichts-% betrug. In den Spalten 1, 2 und 3 der Tabelle 1 sind die verschiedenen Komponenten des verwendeten AC-Fillers, in Spalte 4 die Trocknungszeit bis zur Ueberfahrbarkeit und in Spalte 5 das Ergebnis einer Prüfung auf Rissbildung angegeben. Die Ergebnisse der Tabelle 1 beziehen sich auf mit einem sogenannten Ziehschuh auf Pappe gezogene Markierungen mit einer Schichtdicke von 3 mm.

Die Reihen 1 bis 4 beziehen sich auf AC-Filler, deren Teilchenoberflächen nicht behandelt wurden. Zeile 5 zeigt das Ergebnis bei Verwendung von AC-Filler-Komponenten mit einer Oberflächenbehandlung, die in einer Beschichtung der Teilchen mit einem Organosilan als Haftvermittler zwischen den Teilchen und dem Bindemittel bestand. Zeile 6 schliesslich zeigt zum Vergleich das Ergebnis mit einem nicht beschleunigt, sondern konventionell trocknenden Bindemittel. Farbmarkierungen mit üblichen Zusammensetzungen können in diesen Schichtdicken nicht appliziert werden, so dass ein Vergleich mit diesen nicht möglich ist.

Für die AC-Filler wurden übliche Glasperlen bzw. Reflexperlen mit einem Durchmesser von 100 bis 250 µ einerseits und einem Durchmesser von 250 bis 500 µ andererseits verwendet. Der benutzte Quarzsand hatte Cristoballit-Struktur und bestand aus Teilchen mit einem Durchmesser von 100 bis 400 µ.

Wie Tabelle 1 zeigt, liefert eine bevorzugte Zusammensetzung des AC-Fillers aus einem Drittel feiner Glasperlen mit 100 bis 250 µ Durchmesser, einem Drittel grober Glasperlen mit 250 bis 500 µ und einem Drittel an grobem Quarzsand mit Teilchendurchmessern von 100 bis 400 µ die kürzeste Trocknungszeit. Aber auch alle anderen Zusammensetzungen des AC-Fillers lieferten laut Tabelle 1 hervorragende Ergebnisse, verglichen mit dem Einsatz eines konventionell trocknenden Bindemittels (Tabelle 1, Reihe 6), mit welchem eine zwei- bis dreimal so lange Trocknungszeit von 71 Minuten in Kauf genommen werden musste; diese konventionellen Bindemittel sind daher für Dickschichtmarkierungen nicht brauchbar, da sie nicht verkehrsgerecht appliziert werden können. Risse wurden in keinem Falle beobachtet.

Die Versuche zur Messung der Trocknungszeit wurden in einer Klimakammer mit leichter Luftbewegung, bei konstanter Temperatur und Luftfeuchtigkeit, durchgeführt. Die Markierungsmassen wurden mit einem Ziehschuh auf einer Pappunterlage in definierter Schichtdicke aufgetragen. Dann liess man den Film trocknen. Eine etwas saugfähige Pappunterlage simuliert die mehr oder weniger saugfähige Bitumenschicht einer Strasse besser als zum Beispiel eine Glasplatte. Die Prüfung auf Ueberfahrbarkeit erfolgte, indem man mit dem Daumen unter leichtem Druck eine Drehbewegung auf der Farboberfläche durchführte. Wenn keine Farbe mehr am Daumen haftete, galt die Beschichtung als befahrbar. 60 Minuten nach der Trocknung wurden die Proben mit dem Material für 10 Minuten in Wasser eingetaucht. Konnte auch durch kurzes, kräftiges Reiben die Beschichtung nicht mehr zerstört werden, so galt die Farbe als wasserfest. Das war bei allen Proben der Fall.

Ausser Messungen an Dickschichten mit 3 mm Dicke wurden ferner, unter Verwendung der jeweils gleichen Zusammensetzung der Markierungsmasse mit den in Tabelle 1 angegebenen AC-Fillern, Dickschichten mit 1 mm und mit 2 mm Dicke getestet. Die Ergebnisse sind in Tabelle 2 angegeben, in welcher sich die Zeilen 1 bis 6 auf die in den Zeilen 1 bis 6 der Tabelle 1 genannten Zusammensetzungen des AC-Fillers beziehen und die Spalten 1, 2 und 3 die Trocknungszeiten in Minuten für Dickschichten von 1 mm, 2 mm und 3 mm angeben. Die Trockung erfolgte bei 20°C und 70% Luftfeuchtigkeit. Appliziert wurde auf Pappkarton. Alle Beschichtungen gemäss den Zeilen 1 bis 5 erwiesen sich 60 Minuten nach der Trocknungszeit als wasserfest. Wiederum sind die Trocknungszeiten der ein konventionelles Bindemittel enthaltenden Proben 2- bis 3-mal so lang wie die der Proben nach der Erfindung.

Allgemein können die Zusammensetzungen des niedrigviskosen Anteils, bezogen auf die fertige Markierungsmasse, 12 bis 24 Gewichts-%, vorzugsweise 15 bis 20 Gewichts-% Bindemittel, das etwa zur Hälfte aus festen Substanzen besteht, 6 bis 9 Gewichts-%, vorzugsweise 7 bis 8 Gewichts-% Farbpigmente, 20 bis 27 Gewichts-% pulverförmige Füllstoffe und 1,6 bis 2,4 Gewichts-%, vorzugsweise etwa 2 Gewichts-% Additive betragen. Allgemein können als pulverförmige Füllstoffe insbesondere Carbonate, Silicate, Talkum oder Sulfate verwendet werden. Die Art, Reinheit und Körnigkeit der feinen Füllstoffe beeinflussen zwar die Eigenschaften des niedrigviskosen Farbanteils, die Eigenschaften der fertigen Markierungsmassen, vor allem die Trocknungszeit, jedoch nur geringfügig, so dass darauf nicht weiter eingegangen zu werden braucht. Wesentlich ist der Festkörperanteil, der 87 bis 93, vorzugsweise 89 bis 91 Gewichts-% betragen soll.

Allgemein lässt sich ein AC-Filler aus grobkörnigen mineralischen und/oder organischen Partikeln mit einem minimalen Korndurchmesser von 100 µ verwenden. Im einzelnen können beispielsweise, wie weitere Versuche zeigten, folgende AC-Filler mit Erfolg eingesetzt werden :
Glasperlen mit einem Durchmesser von 100 bis 200 µ;
Glasperlen mit einem Durchmesser von 100 bis 200 µ, gemischt mit Glasperlen, die einen Durchmesser von 100 bis 700 µ haben;
Quarzsände und Christoballite mit einem Teilchendurchmesser von 100 bis 400 µ, gemischt mit Glasperlen mit einem Durchmesser von 100 bis 200 µ;
Quarzsände und Christoballite mit einem Teilchendurchmesser von 100 bis 400 µ, gemischt mit Glaskugeln mit einem Durchmesser von 100 bis 200 µ und 100 bis 700 µ;
Quarzsände und Christoballite mit einem Teilchendurchmesser von 100 bis 400 µ, gemischt mit Glasperlen und wasserunlöslichen Carbonaten, Sulfaten oder anderen Mineralstoffen mit einem Korndurchmesser von 100 bis 400 µ.

An organischen Füllstoffen kommen grobe Granulate harter Kunststoffe, wie sie zum Beispiel bei der Flugzeugherstellung anfallen, in Frage, oder ähnliche andere Granulate.

Die resultierenden Markierungsmassen mit den AC-Fillern nach Tabelle 1 sind hoch viskos und hervorragend mit den für solche Systeme üblichen Methoden zu verarbeiten. Sie haben eine ausgezeichnete Lagerstabilität und können mit den einfachsten Methoden appliziert werden. Eine Rissbildung ist in keiner Weise zu beobachten. Nach ausreichender Trockungszeit in der Grössenordnung von 20 bis 30 Minuten resultieren Farbfilme mit grosser Härte und guter Bodenhaftung. Die Trocknungszeit erwies sich als relativ unabhängig von der Temperatur und der Luftfeuchtigkeit.

Die Herstellung der wässrigen Markierungsmasse gemäss der Erfindung kann so erfolgen, dass zunächst der niedrigviskose Farbanteil aus seinen Komponenten einschliesslich des trocknungsbeschleunigten Bindemittels, welches in luftdicht verschlossenen Behältern angeliefert wird, zusammengemischt wird und dann mit dem beschriebenen AC-Filler gemischt wird. Diese hochviskose Masse lässt sich, wie erwähnt, vorzugsweise mit einem Ziehschuh verlegen. Andererseits lässt sich die fertige Markierungsmasse auch so herstellen, dass der fertig gemischte niedrig viskose Farbanteil, der eine spritzfähige Masse darstellt, mittels einer üblichen, auf einem Markierungsfahrzeug installierten Spritzpistole in Richtung auf die Fahrbahnoberfläche gespritzt und vor Erreichen der Fahrbahnoberfläche mit den Teilchen des AC-Fillers versetzt wird; dazu werden die AC-Filler-Teilchen mit wenigstens einer Füllstoffpistole in den die Farbspritzpistole verlassenden Strahl eingeschossen. Vorzugsweise können die Füllstoff-Teilchen mit Hilfe zweier Füllstoff-Pistolen von zwei Seiten her in den Farbstrahl eingeschossen werden, bevor dieser die Fahrbahnoberfläche erreicht. Auf diese Weise wird die fertige Markierungsmasse erst unmittelbar vor dem Auftreffen der Farbmasse auf der Fahrbahnoberfläche fertiggestellt. Das Einschiessen von Teilchen in einen Farbstrahl ist bekannt und beispielsweise in der EP-B-0 280 102 beschrieben.

**TABELLE 1**

| | 1 Perlen 100-250µ | 2 Perlen 250-500µ | 3 Quarzsand 100-400µ | 4 Trocknung | 5 Risse |
|---|---|---|---|---|---|
| 1) | 16,66% | 16,66% | 16,66% | 25 min. | keine |
| | | | | | |
| 2) | 50,00% | ------ | ------ | 31 min. | keine |
| | | | | | |
| 3) | ------ | 50,00% | ------ | 33 min. | keine |
| | | | | | |
| 4) | ------ | ------ | 50,00% | 24 min. | keine |
| | | | | | |
| 5)* | 16,66% | 16,66% | 16,66% | 21 min. | keine |
| | | | | | |
| 6)** | 16,66% | 16,66% | 16,66% | 71 min. | keine |

| | | | | | |
|---|---|---|---|---|---|
| * AC-Filler-Teilchen wurden oberflächenbehandelt. | | | | | |
| ** Probe mit konventionell trocknendem Bindemittel. | | | | | |

**TABELLE 2**

| Materialart nach Tabelle 1 | **Schichtdicke** | | |
|---|---|---|---|
| | 1 mm | 2 mm | 3mm |
| 1) | 07 min. | 17 min. | 25 min. |
| 2) | 09 min. | 19 min. | 31 min. |
| 3) | 09 min. | 22 min. | 33 min. |
| 4) | 07 min. | 17 min. | 24 min. |
| 5) | 06 min. | 16 min. | 21 min. |
| 6) | 20 min. | 43 min. | 71 min. |

## Patentansprüche

1. Wässrige Markierungsmasse für Horizontal-Markierungen auf Strassen oder anderen Verkehrsflächen, insbs. zur Verlegung von Markierungen mit Schichtdicken von etwa 1 bis 3 mm, welche ein trocknungsbeschleunigtes Bindemittel auf der Grundlage eines anionisch-stabilisierten Emulsionspolymers und Füllstoffe enthält, dadurch gekennzeichnet, dass die fertige Markierungsmasse einen niedrigviskosen Anteil von 40 bis 60 Gewichts-%, bestehend aus dem trocknungsbeschleunigten Bindemittel, Farbpigmenten, pulverförmigen Füllstoffen und Additiven, enthält und die übrigen Gewichts-% von groben Füllstoffen gebildet werden, deren Teilchendurchmesser wenigstens 0,1 mm beträgt, und dass der gesamte Festkörpergehalt 87 bis 93 Gewichts-% beträgt.

2. Wässrige Markierungsmasse nach Anspruch 1, dadurch gekennzeichnet, dass die groben Füllstoffe 45 bis 55 Gewichts-%, vorzugsweise etwa 50 Gewichts-% der fertigen Markierungsmasse ausmachen und der gesamte Festkörpergehalt 89 bis 91 Gewichts-% beträgt.

3. Wässrige Markierungsmasse nach Anspruch 1 oder 2, dadurch gekennzeichnet, dass die groben Füllstoffe aus Glasperlen oder aus einem Gemisch aus Glasperlen und Quarzsand bestehen.

4. Wässrige Markierungsmasse nach Anspruch 1 oder 2, dadurch gekennzeichnet, dass die groben Füllstoffe aus einem Gemisch aus Glasperlen und Quarzsand bestehen und dass 100 Gewichtsteile dieses Gemisches 20 bis 70 Gewichtsteile Glasperlen mit einem Teilchendurchmesser von 0,1 bis 0,7 mm enthalten und der Rest dieses Gemisches aus Quarzsand mit einem Teilchendurchmesser von 0,1 bis 0,4 mm besteht.

5. Wässrige Markierungsmasse nach Anspruch 4, dadurch gekennzeichnet, dass sich der Anteil an groben Füllstoffen aus jeweils ungefähr einem Drittel an Glasperlen mit einem Teilchendurchmesser von 0,1 bis 0,25 mm, ungefähr einem Dritten an Glasperlen mit einem Teilchendurchmesser von 0,25 bis 0,6 mm und ungefähr einem Drittel an Quarzsand mit einem Teilchendurchmesser von 0,1 bis 0,4 mm zusammensetzen.

6. Wässrige Markierungsmasse nach einem der Ansprüche 1 bis 5, dadurch gekennzeichnet, dass der erwähnte niedrigviskose Anteil, bezogen auf die fertige Dispersionsfarbe, 12 bis 24 Gewichts-%, vorzugsweise 15 bis 20 Gewichts-% Bindemittel, 6 bis 9 Gewichts-% Farbpigmente, 20 bis 27 Gewichts-%, vorzugsweise 22 bis 25 Gewichts-% pulverförmige Füllstoffe und etwa 2 Gewichts-% Additive enthält.

7. Wässrige Markierungsmasse nach einem der Ansprüche 3 bis 6, dadurch gekennzeichnet, dass die Teilchen des groben Füllstoffs oberflächenbehandelt und mit einem Organosilan als Haftvermittler zwischen den Teilchen und dem Bindemittel beschichtet sind.

8. Verfahren zur Herstellung einer wässrigen Markierungsmasse nach Anspruch 1, dadurch gekennzeichnet, dass zunächst der niedrigviskose Anteil, der eine spritzfähige Masse bildet, durch Mischen der Komponenten hergestellt wird und anschliessend diese spritzfähige Masse mit den groben Füllstoffen gemischt wird.

9. Verfahren nach Anspruch 8, dadurch gekennzeichnet, dass die spritzfähige Masse und die groben Füllstoffe vor Beginn der Markierungsarbeiten gemischt werden.

10. Verfahren nach Anspruch 8, dadurch gekennzeichnet, dass die spritzfähige Masse während der Markierungsarbeiten mit einer Spritzpistole in Richtung auf die Strassenoberfläche gespritzt und in den aus der Spritzpistole austretenden Strahl die groben Füllstoffe aus wenigstens einer Füllstoffpistole eingeschossen werden, so dass sich die fertige Dispersionsfarbe erst unmittelbar vor dem Auftreffen auf der Strassenoberfläche bildet.

## Claims

1. Aqueous marking composition for horizontal markings on roads or other traffic areas, in particular for laying of markings with layer thickness of about 1 to 3 mm, which comprises a drying-accelerating binder on the basis of an anionically stabilized emulsion polymer and fillers, characterised in that the finished marking composition comprises a low-viscosity component of 40 to 60 % by weight, consisting of the drying-accelerating binder, colour pigments, pulverulent fillers and additives, and the remaining percentages by weight are formed by coarse fillers whose particle diameter is at least 0,1 mm, and in that the overall solids content is 87 to 93 % by weight.

2. Aqueous marking composition according to claim 1, characterised in that the coarse fillers make up 45 to 55 % by weight, preferably about 50 % by weight of the finished marking composition and the overall solids content is 89 to 91 % by weight.

3. Aqueous marking composition according to claim 1 or 2, characterised in that the coarse fillers consist of glass beads or of a mixture of glass beads and quartz sand.

4. Aqueous marking composition according to claim 1 or 2, characterised in that the coarse fillers consist of a mixture of glass beads and quartz sand and in that 100 parts by weight of this mixture comprise 20 to 70 parts by weight of glass beads with a particle diameter of 0,1 to 0,7 mm and the remainder of this mixture consists of quartz sand with a particle diameter of 0,1 to 0,4 mm.

5. Aqueous marking composition according to claim 4, characterised in that the proportion of coarse fillers are composed of in each case approximately one third of glass beads with a particle diameter of 0,1 to 0,25 mm, approximately one third of glass beads with a particle diameter of 0,25 to 0,6 mm and approximately one third of quartz sand with a particle diameter of 0,1 to 0,4 mm.

6. Aqueous marking composition according to one of claims 1 to 5, characterised in that said low-viscosity component mentioned, relative to the finished marking composition, comprises 12 to 24 % by weight, preferably 15 to 20 % by weight of binder, 6 to 9 % by weight of colour pigments, 20 to 27 % by weight, preferably 22 to 25 % by weight of pulverulent fillers and about 2 % by weight of additives.

7. Aqueous marking composition according to one of claims 3 to 6, characterised in that the particles of the coarse fillers are surface-treated and are coated with an organosilane as adhesion promoter between the particles and the binder.

8. Process for preparing an aqueous marking composition according to claim 1, characterised in that first of all the low-viscosity component, which forms a sprayable composition, is prepared by mixing the components and then this sprayable composition is mixed with the coarse fillers.

9. Process according to claim 8, characterised in that the sprayable composition and the coarse fillers are mixed before the beginning of the marking works.

10. Process according to claim 8, characterised in that during the marking works the sprayable composition is sprayed in the direction of the road surface with a spray gun and the coarse fillers are projected from at least one filler gun into the jet emerging from the spray gun, so that the finished marking composition is not formed until directly prior to its impingement on the road surface.

## Revendications

1. Matière de marquage aqueuse pour le marquage horizontal sur des routes ou d'autres surfaces de circulation, en particulier pour la dépose de marques ayant des épaisseurs de couche d'environ 1 à 3 mm, laquelle contient un liant accélérant le séchage basé sur un polymère en émulsion à stabilisation anionique et de la matière de remplissage, caractérisé en ce que la matière de marquage finie contient 40 à 60% en poids d'un composant à faible viscosité, consistant dans le liant accélérant le séchage, des pigments de couleur, des matières de remplissage pulvérulentes et des additifs, et les pourcentages en poids restants sont formés par des matières de remplissage grossières, dont le diamètre des particules est au moins 0,1 mm, et en ce que le contenu solide total vaut de 87 à 93% du poids total.

2. Matière de marquage aqueuse selon la revendication 1, caractérisée en ce que les matières de remplissage grossières forment 45 à 55% du poids, de préférence 50% de la matière finie et en ce que le contenu solide vaut de 89 à 91% du poids total.

3. Matière de marquage aqueuse selon la revendication 1 ou 2, caractérisée en ce que les matières de remplissage grossières sont formées par des perles de verre ou par un mélange de perles de verre et de sable silicieux.

4. Matière de marquage aqueuse selon la revendication 1 ou 2, caractérisée en ce que les matières de remplissage grossières sont formées par un mélange de perles de verre et de sable silicieux et en ce que 100 parties en poids de ce mélange contiennent 20 à 70 parties en poids de perles de verre avec un diamètre de particules de 0,1 à 0,7 mm et le reste de ce mélange se compose de sable silicieux avec un diamètre de particules de 0,1 à 0,4 mm.

5. Matière de marquage aqueuse selon la revendication 4, caractérisée en ce que la proportion en matière de remplissage grossière est composée chaque fois d'environ un tiers de perles de verre avec un diamètre de particules de 0,1 à 0,25 mm, environ un tiers de perles de verre avec un diamètre de particules de 0,25 à 0,6 mm et environ un tiers de sable silicieux avec un diamètre de particule de 0,1 à 0,4 mm.

6. Matière de marquage aqueuse selon l'une des revendications 1 à 5, caractérisée en ce que ladite portion de faible viscosité, par rapport à la peinture à dispersion finie, contient 12 à 24% en poids, de préférence 15 à 20% en poids de liant, 6 à 9% en poids de pigments de couleur, 20 à 27% en poids, de préférence 22 à 25% en poids de matières de remplissage pulvérulentes et environ 2% en poids d'additifs.

7. Matière de marquage aqueuse selon l'une des revendications 3 à 6, caractérisée en ce que les particules des matières de remplissage grossières ont subi un traitement de surface et sont couvertes d'un organosilane comme agent de pontage entre les particules et le liant.

8. Procédé de fabrication d'une masse de marquage aqueuse selon la revendication 1, caractérisé en ce que tout d'abord, la part ayant une faible viscosité, qui forme une composition vaporisable, est préparée en mélangeant les composants et ensuite cette composition vaporisable est mélangée avec les matières de remplissage grossières.

9. Procédé selon la revendication 8, caractérisé en ce que la composition vaporisable et les matières de remplissage grossières sont mélangées avant le travail de marquage.

10. Procédé selon la revendication 8, caractérisé en ce que la composition vaporisable pendant les travaux de marquage est vaporisée avec un pistolet pulvérisateur en direction de la surface de la route et en ce que les matières de remplissage grossières sont projetées dans le jet issu du pistolet pulvérisateur par au moins un pistolet pulvérisateur de matières de remplissage grossières, de sorte que la peinture à dispersion finie n'est formée que juste avant d'arriver sur la surface de la route.
